# NEW EUROPEAN PATENT SPECIFICATION

(11) **EP 2 568 094 B2**
(45) Date of publication and mention of the opposition decision: **17.03.2021**
(45) Mention of the grant of the patent: 23.04.2014
(21) Application number: 12006216.1
(22) Date of filing: 03.09.2012
(51) Int. Cl.: E04D 13/03, E04D 13/035, F24J 2/04, F24J 2/52

(54) **A roof window, in particular a roof window apt to be mounted within a set of solar panels**
Dachfenster, insbesondere ein Dachfenster, das innerhalb eines Satzes von Solarkollektoren angebracht werden kann
Lucarne, en particulier d'une fenêtre de toit apte à être montée à l'intérieur d'un ensemble de panneaux solaires

(30) Priority: 12.09.2011 PL 39631011
(43) Date of publication of application: 13.03.2013
(73) Proprietor: FAKRO PP Spolka z ograniczona odpowiedzialnoscia, 33-300 Nowy Sacz (PL)
(72) Inventor: Majoch, Waclaw, 33-300 Nowy Sacz (PL); Mucha, Lukasz, 33-330 Grybów (PL)
(74) Representative: Lukaszyk, Szymon

(56) References cited:
- EP-A1- 0 615 037
- EP-A1- 0 615 037
- EP-A2- 0 269 969
- EP-A2- 2 405 072
- WO-A1-98/31896
- WO-A1-98/31896
- DE-U1- 20 106 515
- DE-U1-202007 000 526
- US-A- 3 473 276
- US-A- 4 570 393
- US-A1- 2010 018 138

## Description

### Technical Field

The present invention relates to a roof window, in particular a roof window apt to be mounted within a set of solar panels, according to the preamble of claim 1.

Using solar panels in household heating installations is gaining more popularity nowadays. They are mounted on a roof slope in matrix sets of a substantial area comprising a few and up to even tens of individual panels. Similarly as roof windows and other elements mounted in a roof slope, solar panels are provided with sealing flanges, mostly in a form of profiled sheet metal plates, installed around the perimeter of a solar panel and fixed to the panel and to a roof construction. Flanges of this kind seal a connection between frames of solar panels neighbouring each other or between a solar panel and a roof surface.

In case of mounting roof windows along with solar panels, it is desirable to ensure good thermal insulation of window areas devoid of roof insulation material as well as to maintain a visual harmony of panels and windows seen from the outer side of a building and influenced mainly by dimensions of windows and lines defined by system flashings of solar panels.

Known roof windows have window frames having construction and dimensions different to that of the solar panels, and mostly lumen (area) of the window frame is much smaller than the surface of the panel. For that reason installation of a roof window between solar panels is complicated and requires using special intermediate elements connecting a window frame with neighbouring solar panels. Furthermore, in order to ensure tightness of a connection of a window with a neighbouring solar panel or another window a special flashing is required.

An exemplary solution of this kind is disclosed in European patent application EP 1 944 425 A2, where a mounting frame having outer dimensions close to that of a frame of a panel is mounted to a window frame, by means of specially shaped tin profiles. Special profiles are mounted to this mounting frame for mechanical connection with a flashing of a neighbouring solar panel or window and sealing an area between these neighbouring elements. Apart of a necessity of using special tin profiles, disclosed construction has a weak thermal insulating power in an area of such an intermediate profile.

Another solutions related with the above described constructions of roof windows are also disclosed in publications of the patent applications WO 98/31896 and US 4,570,393.

It has been an object of the present invention to provide a roof window having a construction enabling for an easy and fast installation of a window among solar panels in a roof slope, as well as ensuring a visual harmony of a set of panels comprising such a roof window or windows.

### Summary of the Invention

The invention provides a roof window as defined by the characterising portion of claim 1.

Thanks to that a window frame forms a kind of an "adapter", allowing to adjust external dimensions of a window module according to the present invention to dimensions of any other element mounted in a roof slope and having a larger surface area, and furthermore to provide such a window module with a framing having the same construction as the framing of this other element.
This in turn enables for creating matrix sets of solar panels and roof windows featuring a visual harmony demonstrated by regularity of such a matrix set and lines separating windows with panels and panels with panels. Prefabricated modular construction of a window according to the present invention is exceptionally simple and enables to mount the window in any location within a set of panels in few steps.

Profiled outer frame enables for using an existing system flashing of a panel to be replaced as an outer sealing flange with no need to dismount adjoining solar panels. Using a fixing frame member of a wooden or plastic window frame increases thermal insulation of such a connection.

The roof window according to the present invention comprises at least one sheet of vapour-permeable membrane to be connected with vapour-permeable roof membrane.

Said at least one sheet of breathable roof membrane is clenched in a circumferential area between the fixing frame member and said outer frame of the fixing frame member. This forms an exceptionally simple, reliable and tight connection of a membrane with a window.

Preferably window frame comprises additional at least one inner frame member adjoining the bottom surface of the window frame member. Inner frame member increases thermal insulation of the window frame and aesthetic assets of a window from within a room.

Preferably the window according to the present invention comprises at least two window frame members, wherein a fixing frame member comprises additional, inner transverse elements and the inner flange seals an area between the window frame members over said additional elements of the fixing frame member.

Such a multi-sashed construction of a window according to the present invention is preferred taking into account, usually significant dimensions of the panel to be replaced with a window. In this case a single window sash may be technologically and/or due to stresses that it would need to bear difficult to manufacture and/or clumsy in using due to its weight.

Window frame members may obviously be distributed vertically (one above the other) or horizontally (one next to each other).

Alternatively or additionally the roof window according to the invention preferably comprises at least one masking panel embedded in said at least one window frame member. Masking panel enables for covering unused lumen of the window frame. This unused area of the window may obviously be covered from inside of the room in a typical manner, for example using gypsum paper plaster boards.

Preferably the sealing flange additionally comprises an outer flange for connecting connection means of the fixing frame member with elements neighbouring the roof window.

The outer flange may be an additional element of a window according to the present invention, where it is impossible to use existing system flashings of solar panels. It takes place in particular in a situation, where just a roof window according to the present invention is mounted in a roof slope.

### Brief Description of the Drawings

The invention is presented below in exemplary embodiments and in connection with the attached drawings on which:
Fig. 1 schematically illustrates an exemplary roof window according to the present invention (without window sashes) in a perspective view ready to be mounted in a roof slope;
Fig. 2 illustrates a partial cross-section of the window shown in Fig. 1 along the line A-A after fixing among solar panels of a roof slope, as illustrated in Fig. 5;
Fig. 3 illustrates an inner transverse cross-section of the profile of the outer frame;
Fig. 4 shows a partial cross-section of the window shown in Fig. 1 along the line B-B after fixing in a roof slope; and
Fig. 5 shows a set of solar panels with two roof windows according to the present invention.

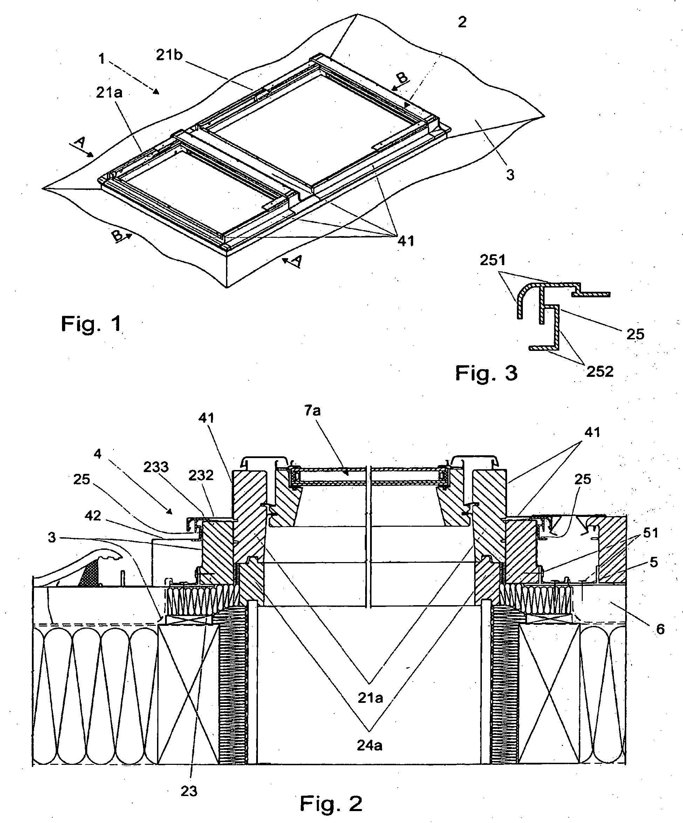

Prefabricated roof window 1 shown in Fig. 1 is a two-winged window, having a window frame 2 comprising two frame members 21a, 21b for mounting window sashes 7a, 7b on hinged joints, as shown in Fig. 2, Fig. 4 and Fig. 5. Furthermore, the window 1 is provided with a breathable membrane 3, the projecting parts thereof serve to connect the window 1 with a breathable roof membrane (not shown in the drawing) while the window is being fixed in the roof slope.

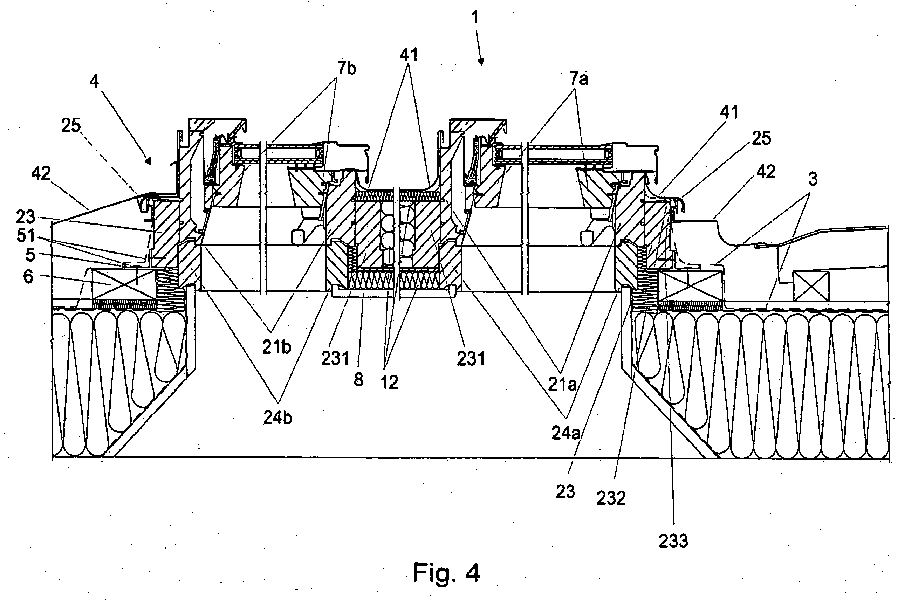

As shown in cross-sectional views in Fig. 2 and Fig. 4, window frame members 21 a and 21b are fixed by means of screws (not shown in the drawing) to a common fixing frame member 23 having an inner profile matching an external profile of the window frame members 21 a and 21 b. Bottom surfaces of window frame members 21 a, 21 b are located above the top surface of the fixing frame member 23. Fixing frame member 23 is mounted by means of screws 51 to metal mounting brackets 5 fixed to elements (battens/beams) of a roof construction 6.

In this embodiment, fixing frame member 23 comprises two additional, inner transverse elements or beams 231. Circumferential elements of the fixing frame member 23 and these transverse elements 231 adjoin circumferentially to circumferential elements of the window frame members 21a, 21b. On the other hand, to the bottom surfaces of the window frame members 21 a, 21 b adjoin inner frame members 24a, 24b, wherein adjoining bottom surfaces of the frame members 21 and top surfaces of the frame members 24 have a complementary configuration of a tongue and groove joint type. A space between additional transverse elements 231 of a fixing frame member 23 is filled with a rock wool insulation material 12 and closed from the bottom by C-shaped covering element 8 having its arms embedded in grooves of the inner frame members 24a, 24b. The C-shaped covering element 8 has an aesthetic function.

Profiled metal outer frame 25 form connection means of the fixing frame member 23 and are fixed circumferentially by means of screws (not shown) to the top surface 232 and to the outer surface 233 of the fixing frame member 23.

Profiles 25 extend beyond the outline of the fixing frame member 23 and, as shown in Fig. 3, are provided with a top angle section 251 with a rounded corner constituting a first connection means for an inner sealing flange 41 and a bottom angle section 252 constituting a second connection means for an outer sealing flange 42.
Sheets of the breathable roof membrane 3 are clamped in a circumferential area between the fixing frame member 23 and the profiled outer frame 25.

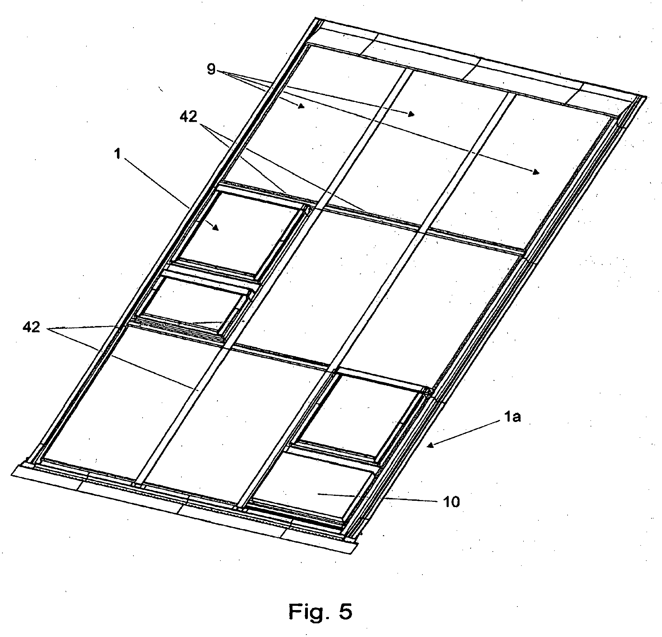

The sealing flange 4 of the window 1 comprises an inner flange 41, sealing an area of window frame members 21a, 21b between window sashes 7a, 7b, and outer flange 42 sealing an area of a roof slope between an outer frame 25 and elements neighbouring a given window that is: neighbouring window or solar panel (as in the case shown in Fig. 2 and Fig. 5) or solely surface of the roof slope (as in the case of mounting a window alone shown in Fig. 4). The sealing flange 4 has a form of a flashing of the window frame 2 of the window 1.

The inner sealing flange 41 is made of a number of elongated sheets of metal screwed by means of screws (not shown in the drawing) to window frame members 21 a, 21 b and bend perpendicularly along and around the edges of the angle sections 251 of the profiles of the outer frame 25. In the presented embodiment of a double window, the inner flange 41 also seals an area between the window frame members 21 a, 21 b over the inner transverse elements 231 of the fixing frame member 23 and over the insulation material 12.

The outer flange 42 constitutes a system flashing of the solar panel, in a place of which the window 1 has been installed. Similarly as the inner flange 41, the outer flange is made of a number of interconnected metal sheets mounted to the roof construction 6. At the other side, elements of the flange 42 are elastically pressed in sockets of the bottom angle sections 252 of the profiles of the outer frame 25. Second connection means 252 of the outer frame 25 are in this embodiment adapted to mount the flashing of an exchanged solar panel.

Fig. 5 shows a set of seven solar panels 9, having two windows 1 and 1a according to the present invention mounted over the periphery. Using a window frame having an outer frame and a fixing frame member, having a perimeter corresponding to the outer dimensions of the frames of the panels 9, allows using standard system sealing flanges 42 of the solar panels 9 in all vertical and horizontal areas between neighbouring elements 1, 1a and 9. Furthermore, the bottom window 1a comprises a masking panel 10 instead of a window sash. Although in a presented embodiment longer window dimension is parallel to the angle of inclination of the roof slope, and window sashes have a vertical orientation (one above the other), in an alternative embodiment longer window dimension may be perpendicular to the angle of inclination of the roof slope, while window sashes may have a horizontal orientation (one next to each other).

For better illustration of the invention, the figures above are not necessarily to scale, and some features may be exaggerated or minimized. The above embodiments of the present invention should not be considered as limiting the spirit of the invention, the intended scope of protection of which is indicated in appended claims.

## Claims

1. A roof window, in particular a roof window apt to be mounted within a set of solar panels, having a window frame (2) with at least one window sash (7a, 7b) mounted on a hinged joint, and a sealing flange (4) to externally seal a connection between the window frame and elements neighbouring the roof window, the window frame (2) comprises at least one window frame member (21a, 21b), in which said at least one window sash (7a, 7b) is mounted on a hinged joint;
a fixing frame comprising a fixing frame member (23), to be mounted in a roof construction (6), in which said at least one window frame member (21a, 21b) is mounted;
and the sealing flange (4) comprises
an inner sealing flange (41) fixed to the window frame member (21a, 21b) and to connection means of the fixing frame member (23);
wherein, said connection means of the fixing frame member (23) have a form of a profiled metal outer frame (25) mounted circumferentially on the top (232) and outer (233) part of the fixing frame member (23),
extending beyond the outer outline thereof and provided with first connection means (251) and second connection means (252), wherein the inner sealing flange (41) is mounted to said first connection means (251) of said metal outer frame (25),
**characterized in that**, it comprises at least one sheet of vapour-permeable membrane (3) to be connected with a vapour-permeable roof membrane,
and said at least one sheet of breathable roof membrane (3) is clenched in a circumferential area between the fixing frame member (23) and said outer frame (25) of the fixing frame member (23).

2. The roof window according to Claim 1, **characterized in that**, the window frame (2) additionally comprises at least one inner frame member (24a, 24b) adjoining to the bottom surface of the window frame member (21a, 21b).

3. The roof window according to Claim 1 or 2, **characterized in that**, the bottom surface of the window frame member (21a, 21b) is located above the bottom surface of the fixing frame member (23).

4. The roof window according to any one of Claims 1-3, **characterized in that**, it comprises at least two window frame members (21a, 21b), wherein a fixing frame member (23) comprises additional, inner transverse elements (231) and the inner flange (41) seals an area between the window frame members (21a, 21b) over said additional elements (231) of the fixing frame member (23).

5. The roof window according to any one of Claims 1-4, **characterized in that**, it comprises at least one masking panel (10) embedded in said at least one window frame member (21a).

6. The roof window according to any one of Claims 1-5, **characterized in that**, the sealing flange (4) additionally comprises an outer flange (42) for connecting connection means of the fixing frame member (23) with elements neighbouring the roof window (1).

## Patentansprüche

1. Ein Dachfenster, insbesondere ein Dachfenster, das dazu geeignet ist, innerhalb eines Satzes von Sonnenkollektoren montiert zu werden, mit einem Fensterrahmen (2) mit mindestens einem Fensterflügel (7a, 7b), der an einem Scharniergelenk montiert ist, und einem Dichtungsflansch (4), um eine Verbindung zwischen dem Fensterrahmen und Elementen, die dem Dachfenster benachbart sind, nach außen hin abzudichten, wobei der Fensterrahmen (2) Folgendes umfasst
mindestens ein Fensterrahmenelement (21a, 21b), in dem der mindestens eine Fensterflügel (7a, 7b) an einem Scharniergelenk montiert ist;
einen Befestigungsrahmen mit einem Befestigungsrahmenelement (23), das in einer Dachkonstruktion (6) zu montieren ist, in der das mindestens eine Fensterrahmenelement (21a, 21b) montiert ist;
und der Dichtungsflansch (4) umfasst
einen inneren Dichtungsflansch (41), der an dem Fensterrahmenelement (21a, 21b) und an Verbindungsmitteln des Befestigungsrahmenelements (23) befestigt ist;
wobei die Verbindungsmittel des Befestigungsrahmenelements (23) die Form eines profilierten Metallaußenrahmens (25) haben, der in Umfangsrichtung an dem oberen (232) und äußeren (233) Teil des Befestigungsrahmenelements (23) angebracht ist, sich über dessen äußeren Umriss hinaus erstreckt und mit dem ersten Verbindungsmittel (251) und mit dem zweiten Verbindungsmittel (252) versehen ist, wobei der innere Dichtungsflansch (41) an dem ersten Verbindungsmittel (251) des Metallaußenrahmens (25) angebracht ist,
**dadurch gekennzeichnet, dass** es mindestens eine Bahn einer dampfdurchlässigen Membran (3) umfasst, die mit einer dampfdurchlässigen Dachmembran zu verbinden ist,
und die mindestens eine Bahn der atmungsfähigen Dachmembran (3) in einem Umfangsbereich zwischen dem Befestigungsrahmenelement (23) und dem Außenrahmen (25) des Befestigungsrahmenelements (23) eingeklemmt ist.

2. Das Dachfenster nach Anspruch 1, **dadurch gekennzeichnet, dass** der Fensterrahmen (2) zusätzlich mindestens ein inneres Rahmenelement (24a, 24b) umfasst, das an die Unterseite des Fensterrahmenelements (21a, 21b) anschließt.

3. Das Dachfenster nach Anspruch 1 oder 2, **dadurch gekennzeichnet, dass** die untere Fläche des Fensterrahmenelements (21a, 21b) oberhalb der unteren Fläche des Befestigungsrahmenelements (23) angeordnet ist.

4. Das Dachfenster nach einem der Ansprüche 1 bis 3, **dadurch gekennzeichnet, dass** es mindestens zwei Fensterrahmenelemente (21a, 21b) aufweist, wobei ein Befestigungsrahmenelement (23) zusätzliche, innere Querelemente (231) aufweist und der innere Flansch (41) einen Bereich zwischen den Fensterrahmenelementen (21a, 21b) über den zusätzlichen Elementen (231) des Befestigungsrahmenelements (23) abdichtet.

5. Das Dachfenster nach einem der Ansprüche 1-4, **dadurch gekennzeichnet, dass** es mindestens eine Abdeckplatte (10) umfasst, die in das mindestens eine Fensterrahmenelement (21a) eingesetzt ist.

6. Das Dachfenster nach einem der Ansprüche 1-5, **dadurch gekennzeichnet, dass** der Dichtungsflansch (4) zusätzlich einen Außenflansch (42) zum Verbinden von Verbindungsmitteln des Befestigungsrahmenelements (23) mit dem Dachfenster (1) benachbarten Elementen aufweist.

## Revendications

1. Une fenêtre de toit, en particulier une fenêtre de toit susceptible d'être installée dans un ensemble de panneaux solaires, ayant un cadre de fenêtre (2) avec au moins un châssis de fenêtre (7a, 7b) installé sur un joint articulé, et une bride d'étanchéité (4) pour étancher extérieurement une connexion entre le cadre de fenêtre et des éléments voisins de la fenêtre de toit, le cadre de fenêtre (2) comprenant
au moins un élément de cadre de fenêtre (21a, 21b), dans lequel ledit au moins un châssis de fenêtre (7a, 7b) est installé sur un joint articulé;
un cadre de fixation comprenant un élément de cadre de fixation (23), destiné à être installé dans une construction de toit (6), dans laquelle ledit au moins un élément de cadre de fenêtre (21a, 21b) est installé;
et la bride d'étanchéité (4) comprenant
une bride d'étanchéité intérieure (41) fixée à l'élément de cadre de fenêtre (21a, 21b) et aux moyens de connexion de l'élément de cadre de fixation (23);
dans lequel, lesdits moyens de connexion de l'élément de cadre de fixation (23) ont la forme d'un cadre extérieur métallique profilé (25) installé de manière circonférentielle sur la partie supérieure (232) et extérieure (233) de l'élément de cadre de fixation (23), s'étendant au-delà du contour extérieur de celui-ci et pourvu de premiers moyens de connexion (251) et de seconds moyens de connexion (252), dans lequel la bride d'étanchéité intérieure (41) est installée sur lesdits premiers moyens de connexion (251) dudit cadre extérieur métallique (25), **caractérisée en ce qu'**elle comprend au moins une feuille de membrane perméable à la vapeur (3) destinée à être reliée à une membrane de toiture perméable à la vapeur,
et **en ce que** ladite au moins une feuille de membrane de toit respirante (3) est serrée dans une zone circonférentielle entre l'élément de cadre de fixation (23) et ledit cadre extérieur (25) de l'élément de cadre de fixation (23).

2. La fenêtre de toit selon la revendication 1, **caractérisée en ce que** le cadre de fenêtre (2) comprend en outre au moins un élément de cadre intérieur (24a, 24b) adjacent à la surface inférieure de l'élément de cadre de fenêtre (21a, 21b).

3. La fenêtre de toit selon la revendication 1 ou 2, **caractérisée en ce que** la surface inférieure de l'élément de cadre de fenêtre (21a, 21b) est située au-dessus de la surface inférieure de l'élément de cadre de fixation (23).

4. La fenêtre de toit selon l'une quelconque des revendications de 1 à 3, **caractérisée en ce qu'**elle comprend au moins deux éléments de cadre de fenêtre (21a, 21b), dans laquelle un élément de cadre de fixation (23) comprend des éléments transversaux intérieurs supplémentaires (231) et la bride intérieure (41) scelle une zone entre les éléments de cadre de fenêtre (21a, 21b) sur lesdits éléments supplémentaires (231) de l'élément de cadre de fixation (23).

5. La fenêtre de toit selon l'une quelconque des revendications de 1 à 4, **caractérisée en ce qu'**elle comprend au moins un panneau de masquage (10) encastré dans ledit au moins un élément de cadre de fenêtre (21a).

6. La fenêtre de toit selon l'une quelconque des revendications de 1 à 5, caractérisée en ce que_la bride d'étanchéité (4) comprend en outre une bride extérieure (42) pour relier les moyens de connexion de l'élément de fixation de cadre (23) avec des éléments voisins de la fenêtre de toit (1).
